# EUROPEAN PATENT APPLICATION

(11) **EP 4 295 974 A1**
(43) Date of publication of application: **27.12.2023**
(21) Application number: 23176187.5
(22) Date of filing: 30.05.2023
(51) Int. Cl.: B22F 7/06, B22F 10/22, B22F 10/38, B33Y 10/00, B33Y 30/00

(54) **THREE-DIMENSIONAL UNSUPPORTED STRUCTURAL FEATURES AND SYSTEM AND METHODS THEREOF**

(30) Priority: 17.06.2022 US 202217843098
(71) Applicant: Xerox Corporation, Webster, NY 14580 (US)
(72) Inventor: JAYABAL, Dinesh Krishna Kumar, Webster, NY 14580 (US)
(74) Representative: Gill Jennings & Every LLP

(57) **Abstract**

The present disclosure provides a method of forming an overhang for a three-dimensional printed part. The method includes ejecting one or more drops of a print material to create a preform onto a top layer of a three-dimensional printed part where the preform is oriented at an angle of 60 degrees or greater relative to a print bed in a first dimension, and bending the preform to form the overhang having an angle of less than 90 degrees relative to the print bed, and where no portion of the preform contacts the print bed. A printing system for executing a method of forming an overhang for a three-dimensional printed part is also disclosed.

## Description

### Technical Field

The present teachings relate generally to liquid ejectors in drop-on-demand (DOD) printing and, more particularly, to methods and apparatus for printing overhangs and other unsupported structures for use within a DOD printer.

### Background

A drop-on-demand (DOD) or three-dimensional (3D) printer builds (e.g., prints) a 3D object from a computer-aided design (CAD) model, usually by successively depositing material layer upon layer. A drop-on-demand (DOD) printer, for example, one that prints a metal or metal alloy, ejects a small drop of liquid aluminum alloy when a firing pulse is applied. Using this technology or others using various printing materials, a 3D part can be created by ejecting a series of drops which bond together to form a continuous part. For example, a first layer may be deposited upon a substrate, and then a second layer may be deposited upon the first layer. One particular type of 3D printer is a magnetohydrodynamic (MHD) printer, which is suitable for jetting liquid metal layer upon layer which bond together to form a 3D metallic object. Magnetohydrodynamic refers to the study of the magnetic properties and the behavior of electrically conducting fluids.

Furthermore, 3D printing technology is well known for enabling the manufacture of complex 3D designs which otherwise could not be made using traditional methods such as machining, casting, or injection molding. This ability is made possible through a common trait that all the 3D printing processes share, which is to divide a given geometry along the printing direction into multiple two-dimensional (2D) layers and print one layer at a time. In this approach, complex features, such as re-entrant geometries, hollow features, fine features which the traditional tools cannot machine owing to space constraints or reachability, and the like, are divided among multiple layers and fairly simple 2D layers are printed one above the other until the entire object is completed in this fashion. Despite this straightforward approach, each 3D printing process by virtue of its working principle or construction has its own challenges to tackle. One such common challenge manifests in the form of overhangs. An overhang is an unsupported feature of a 3D printed part that is unsupported by an underlying support structure. A layer-by-layer printing approach can produce one or more undersides of a slope in a part, where each subsequent layer must protrude slightly beyond a preceding layer. As the molten printed material is still in its flowable liquid state prior to solidification, gravity and other factors, such as the angle and slope of the overhang, can result in drooping or sagging, curling, or the prohibition of printing a desired shape altogether.

Thus, a method of and apparatus for printing overhangs and other unsupported structures in a drop-on-demand or 3D printer is needed to produce a wider variety of features in 3D printed parts and avoid issues with unsupported structural features.

### Summary

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

The features, functions, and advantages that have been discussed can be achieved independently in various implementations or can be combined in yet other implementations further details of which can be seen with reference to the following description.

### Brief Description of the Drawings

The accompanying drawings, which are incorporated in and constitute a part of this specification, illustrate embodiments of the present teachings and together with the description, serve to explain the principles of the disclosure. In the figures:
FIG. 1 depicts a schematic cross-sectional view of a single liquid metal ejector jet of a 3D printer (e.g., a MHD printer and/or multi-jet printer), in accordance with the present disclosure.
FIG. 2 depicts side cross-sectional views of several geometries of a three-dimensional printed part, in accordance with the present disclosure.
FIG. 3 depicts side cross-sectional views of several layered geometries of a three-dimensional printed part, in accordance with the present disclosure.
FIG. 4 depicts side cross-sectional views of a layered geometry of a three-dimensional printed part, in accordance with the present disclosure.
FIG. 5 depicts side cross-sectional views of several rectangular preforms for 'T' shaped portions of one or more three-dimensional printed parts, in accordance with the present disclosure.
FIG. 6A is a perspective view of a rectangular three-dimensional printed shape having vertically printed preforms including pillars, in accordance with the present disclosure. FIG. 6B is a magnified portion of FIG. 6A, detailing several pillars of the vertically printed preforms, in accordance with the present disclosure.
FIGS. 7A-7D are a series of schematic views demonstrating a method of forming an overhang for a three-dimensional printed part using a printed preform, in accordance with the present disclosure.
FIGS. 8A-8C are a series of schematic views demonstrating a method of forming a bound hollow geometry for a three-dimensional printed part using a printed preform, in accordance with the present disclosure.
FIGS. 9A-9C are a series of schematic views demonstrating a method of forming a three-dimensional printed part using a printed preform, in accordance with the present disclosure.
FIGS. 10A-10C are a series of schematic views demonstrating a method of forming a three-dimensional printed part using a printed preform, in accordance with the present disclosure.
FIG. 11 is a flowchart illustrating a method of forming an overhang for a three-dimensional printed part, in accordance with the present disclosure.

It should be noted that some details of the figures have been simplified and are drawn to facilitate understanding of the present teachings rather than to maintain strict structural accuracy, detail, and scale.

### Detailed Description

Reference will now be made in detail to exemplary examples of the present teachings, examples of which are illustrated in the accompanying drawings. Wherever possible, the same reference numbers will be used throughout the drawings to refer to the same, similar, or like parts.

Examples of the present disclosure provide a printing approach that enables the printing of complex features such as re-entrant geometries, hollow features, fine features which traditional tools cannot machine due to space constraints or reachability and the like. These features may be printed using methods and systems of the present disclosure by printing structures and features which are divided among multiple layers and wherein fairly simple 2D layers can be printed one above the other until the entire object is completed.

Certain liquid metal printing processes do not make use of a metal powder bed to form its aluminum or other metal parts, and as such, printing extreme overhangs as described herein are only possible by bridging over support structures. Currently, support structure layers are made of finely spaced extended, solid supports constructed of aluminum or other applicable print material. Once the part has completed printing, these support structures must be removed, which can often leave a rough overhanging side due to molten metal or molten print material sinking between the fine gaps of the support structures prior to solidification and some remnant support structures can still be left attached to the part after support removal. This involves one or more secondary operations post-printing to provide a better surface finish.

The present disclosure proposes printing thin vertical aluminum preforms, resembling a 2D geometry of the overhanging regions, which can be flattened flush, or at an angle required by the part geometry, relative to the last printed horizontal layer. This flattening or bending operation can be performed during a pause in printing operations, or at a later time after printing. Such a bending or modification operation is not possible in a powder bed processes as it is difficult to return to a forming step involving a previous layer with all the layers of powder present above without disrupting those additional layers. The remaining layers can be printed on top of these bent or flattened preforms to complete the print job. One example of the present disclosure involves a printing of the 3D letter 'T', wherein the thin preforms will be shaped after flattening two rectangular overhanging regions on either side of the stem of 'T'. These preforms are first printed vertically and flattened later so that the horizontal part of the letter can be printed on top of these.

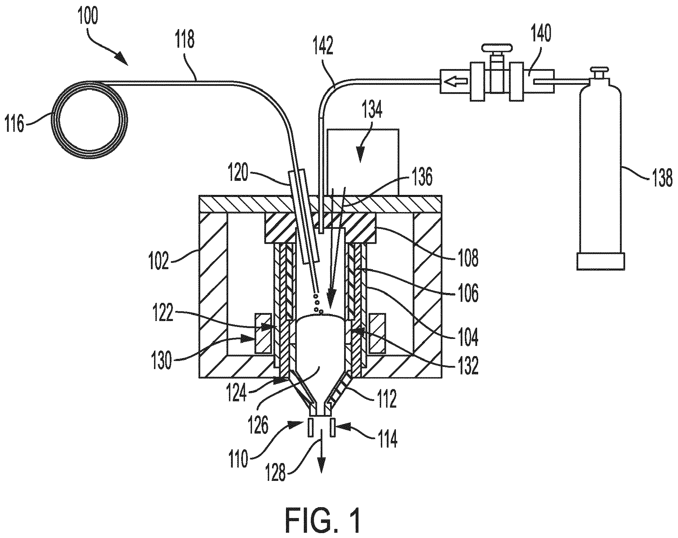

FIG. 1 depicts a schematic cross-sectional view of a single liquid metal ejector jet of a 3D printer (e.g., a MHD printer and/or multi-jet printer), in accordance with the present disclosure. FIG. 1 shows a portion of a type of drop-on-demand (DOD) or three-dimensional (3D) printer 100. The 3D printer or liquid ejector jet system 100 may include an ejector (also referred to as a body or pump chamber, or a "one-piece" pump) 104 within an outer ejector housing 102, also referred to as a lower block. The ejector 104 may define an inner volume 132 (also referred to as an internal cavity or an inner cavity). A printing material 126 may be introduced into the inner volume 132 of the ejector 104. The printing material 126 may be or include a metal, a polymer, or the like. It should be noted that alternate jetting technology aside from MHD as described herein may be necessary depending on the nature and properties of the print material used in examples of the present disclosure. For example, the printing material 126 may be or include aluminum or aluminum alloy, introduced via a printing material supply 116 or spool of a printing material wire feed 118, in this case, an aluminum wire. The liquid ejector jet system 100 further includes a first inlet 120 within a pump cap or top cover portion 108 of the ejector 104 whereby the printing material wire feed 118 is introduced into the inner volume 132 of the ejector 104. The ejector 104 further defines a nozzle 110, an upper pump 122 area and a lower pump 124 area. One or more heating elements 112 are distributed around the pump chamber 104 to provide an elevated temperature source and maintain the printing material 126 in a molten state during printer operation. The heating elements 112 are configured to heat or melt the printing material wire feed 118, thereby changing the printing material wire feed 118 from a solid state to a liquid state (e.g., printing material 126) within the inner volume 132 of the ejector 104. The three-dimensional 3D printer 100 and ejector 104 may further include an air or argon shield 114 located near the nozzle 110, and a water coolant source 130 to further enable nozzle and/or ejector 104 temperature regulation. The liquid ejector jet system 100 further includes a level sensor 134 system which is configured to detect the level of molten printing material 126 inside the inner volume 132 of the ejector 104 by directing a detector beam 136 towards a surface of the printing material 126 inside the ejector 104 and reading the reflected detector beam 136 inside the level sensor 134.

The 3D printer 100 may also include a power source, not shown herein, and one or more metallic coils 106 enclosed in a pump heater that are wrapped at least partially around the ejector 104. The power source may be coupled to the coils 106 and configured to provide an electrical current to the coils 106. An increasing magnetic field caused by the coils 106 may cause an electromotive force within the ejector 104, that in turn causes an induced electrical current in the printing material 126. The magnetic field and the induced electrical current in the printing material 126 may create a radially inward force on the printing material 126, known as a Lorenz force. The Lorenz force creates a pressure at an inlet of a nozzle 110 of the ejector 104. The pressure causes the printing material 126 to be jetted through the nozzle 110 in the form of one or more liquid drops 128.

The 3D printer 100 may also include a substrate, not shown herein, that is positioned proximate to (e.g., below) the nozzle 110. The ejected drops 128 may land on the substrate and solidify to produce a 3D object. The 3D printer 100 may also include a substrate control motor that is configured to move the substrate while the drops 128 are being jetted through the nozzle 110, or during pauses between when the drops 128 are being jetted through the nozzle 110, to cause the 3D object to have the desired shape and size. The substrate control motor may be configured to move the substrate in one dimension (e.g., along an X axis), in two dimensions (e.g., along the X axis and a Y axis), or in three dimensions (e.g., along the X axis, the Y axis, and a Z axis). In another example, the ejector 104 and/or the nozzle 110 may be also or instead be configured to move in one, two, or three dimensions. In other words, the substrate may be moved under a stationary nozzle 110, or the nozzle 110 may be moved above a stationary substrate. In yet another example, there may be relative rotation between the nozzle 110 and the substrate around one or two additional axes, such that there is four or five axis position control. In certain examples, both the nozzle 110 and the substrate may move. For example, the substrate may move in X and Y directions, while the nozzle 110 moves up and/or down in a Y direction.

The 3D printer 100 may also include one or more gas-controlling devices, which may be or include a gas source 138. The gas source 138 may be configured to introduce a gas. The gas may be or include an inert gas, such as helium, neon, argon, krypton, and/or xenon. In another example, the gas may be or include nitrogen. The gas may include less than about 10% oxygen, less than about 5% oxygen, or less than about 1% oxygen. In at least one example, the gas may be introduced via a gas line 142 which includes a gas regulator 140 configured to regulate the flow or flow rate of one or more gases introduced into the three-dimensional 3D printer 100 from the gas source 138. For example, the gas may be introduced at a location that is above the nozzle 110 and/or the heating element 112. This may allow the gas (e.g., argon) to form a shroud/sheath around the nozzle 110, the drops 128, the 3D object, and/or the substrate to reduce/prevent the formation of oxide (e.g., aluminum oxide) in the form of an air shield 114. Controlling the temperature of the gas may also or instead help to control (e.g., minimize) the rate that the oxide formation occurs.

The liquid ejector jet system 100 may also include an enclosure 102 that defines an inner volume (also referred to as an atmosphere). In one example, the enclosure 102 may be hermetically sealed. In another example, the enclosure 102 may not be hermetically sealed. In one example, the ejector 104, the heating elements 112, the power source, the coils, the substrate, additional system elements, or a combination thereof may be positioned at least partially within the enclosure 102. In another example, the ejector 104, the heating elements 112, the power source, the coils, the substrate, additional system elements, or a combination thereof may be positioned at least partially outside of the enclosure 102. While the liquid ejector jet system 100 shown in FIG. 1 is representative of a typical liquid ejector jet system 100, locations and specific configurations and/or physical relationships of the various features may vary in alternate design examples.

Printing systems as described herein may alternatively include other printing materials such as plastics or other ductile materials that are non-metals. The print material may include a metal, a metallic alloy, or a combination thereof. A non-limiting example of a printing material may include aluminum. Exemplary examples of printing systems of the present disclosure may include an ejector for jetting a print material, including a structure defining an inner cavity, and a nozzle orifice in connection with the inner cavity and configured to eject one or more droplets of liquid print material, wherein the ejector is configured to form an overhang for a three-dimensional printed part. The overhang includes one or more drops ejected to create a preform onto a top layer of a three-dimensional printed part wherein the preform is oriented at an angle of 60 degrees or greater relative to a print bed in a first dimension, and wherein no portion of the preform contacts the print bed.

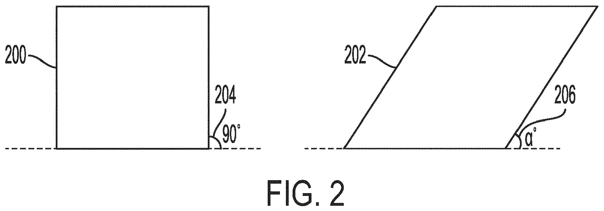

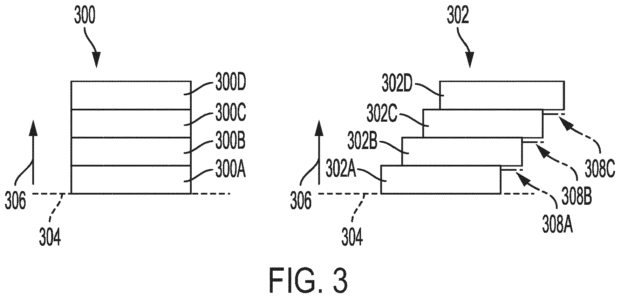

FIG. 2 depicts side cross-sectional views of several geometries of a three-dimensional printed part, in accordance with the present disclosure. A characteristic challenge of such 3D printing systems manifests in the form of overhangs. Overhangs are generally formed when the angle between a feature and the horizontal is less than 90°. In the examples shown in FIG. 2, a first geometry 200 has angles relative to a horizontal printing surface of 90°. As the angle α 206 formed by the right side of the second geometry 202 to the horizontal is less than 90, it will create an overhanging right side. From a 3D printing standpoint, unlike the layers in the first geometry 200, layers of geometry 202 step out of their underlying 2D profiles to form the desired geometry as shown in FIG. 3. FIG. 3 depicts side cross-sectional views of several layered geometries of a three-dimensional printed part, in accordance with the present disclosure. A layered representation of a first geometry 300 is shown, having a first layer 300A, a second layer 300B, a third layer 300C, and a fourth layer 300D, which are successively built or layered by the addition of successive layers of drops in a direction 306. The layers 300A, 300B, 300C, 300D are built in direction 36 which is perpendicular to the horizontal substrate 304. A layered representation of a second geometry 302 is also shown, having a first layer 302A, a second layer 302B, a third layer 302C, and a fourth layer 302D, which are successively built or layered by the addition of successive layers of drops in a direction 306, which is not necessarily perpendicular to the horizontal substrate 304, as demonstrated by the shift of each of the successive layers 302A, 302B, 302C, 302D. This results in a first overhang portion 308A for layer 302B; a second overhang portion 308B for layer 302C, and a third overhang portion 308C for layer 302D. The shallower the angle of a feature, the farther the layers 302A, 302B, 302C, 302D step out, or are printed into space without support between the overhang and the substrate 304. As each 3D printing process has its own limit to how far the layers 302A, 302B, 302C, 302D can step out, the success of printing a geometry depends on the severity of the overhangs 308A, 308B, 308C.

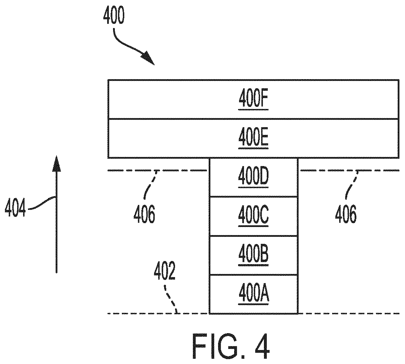

FIG. 4 depicts side cross-sectional views of a layered geometry of a three-dimensional printed part, in accordance with the present disclosure. Some of the more extreme forms of the overhanging features in 3D printed parts are overhangs that are parallel to the print bed of substrate 402. For example, in FIG. 4, a 3D model 400 of the letter 'T' can be printed by a 3D printing process in six layers 400A, 400B, 400C, 400D, 400E, 400F in the orientation of the 3D model 400 shown. In the case of the fifth layer 400E, the extended portions of the fifth layer 400E will abruptly step out at a 90 degree angle relative to the underlying fourth layer 400D to begin forming the horizontal component of the letter. The undersides, or overhangs 406 portion of the fifth layer 400E not supported by the fourth layer 400D form the overhangs 406 or overhanging areas, which are parallel to the print bed or substrate 402. Methods and systems of the present disclosure include a printing approach which can produce one or more undersides of a slope in a part, where each subsequent layer must protrude slightly beyond a preceding layer without resulting in drooping or sagging, curling, or the prohibition of printing a desired shape according to a design.

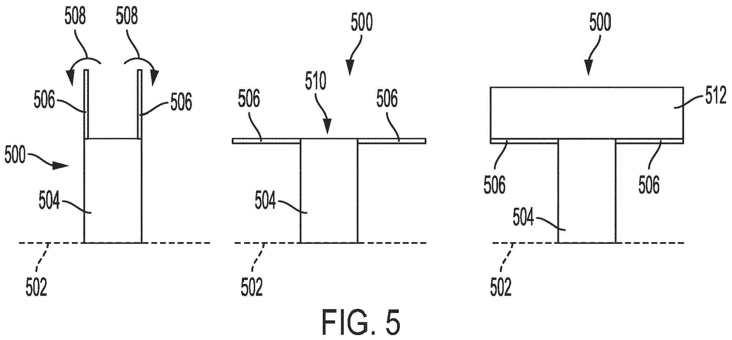

FIG. 5 depicts side cross-sectional views of several rectangular preforms for 'T' shaped portions of one or more three-dimensional printed parts, in accordance with the present disclosure. A three-dimensional printed part 500 is shown, including a portion of a three-dimensional printed part 504, or stem of the 'T' shape printed onto a print bed or substrate 502. Rather than extend an overhang portion by printing into unsupported space, a number of thin, vertical preforms 506, resembling the 2D geometry of the overhanging regions, are printed vertically onto a top edge or top layer of the upper portion of the three-dimensional printed part 504. Once the vertical preforms 506 are printed, they can be bent in a direction towards 508 the print bed or substrate 502, and therefore flattened flush to the last printed horizontal layer at any time. For example, a printing operation may be paused or stopped to fold or flatten the vertical preforms 506, or the vertical preforms 506 can be flattened at a later time, after printing operations have been completed. This type of method or procedure is not possible in powder bed printing processes as it is difficult go back or return to a previous layer with all the layers of powder still present above. At this stage the three-dimensional printed part 500 may include a central portion 510 which can include either a hollow area, within which there is no print material, or an enclosed, solid portion, which is filled either partially or completely with printing material inside one or more outer walls of the portion of the three-dimensional printed part 504. Once the preforms 506 are flattened to their designated angle, remaining layers of print material including a horizontal part 512 can be printed on top of these preforms 506 to complete the print job or three-dimensional part 500. For the example shown in FIG. 5, the 3D letter 'T', the thin preforms 506 will have to be shaped after the two rectangular overhanging regions on either side of the stem of 'T'. These preforms 506 are first printed vertically and flattened later so that the horizontal part 512 of the three-dimensional printed part 500, or letter 'T' can be printed on top of these flattened preforms 506.

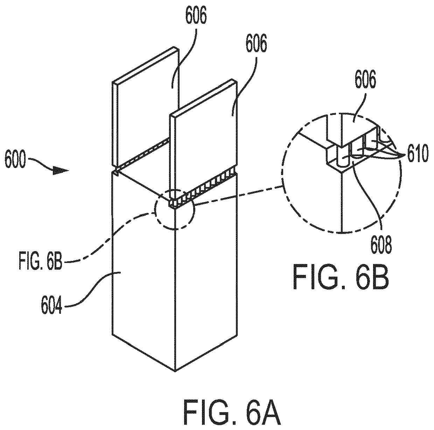

FIG. 6A is a perspective view of a rectangular three-dimensional printed shape having vertically printed preforms including pillars, in accordance with the present disclosure. FIG. 6B is a magnified portion of FIG. 6A, detailing several pillars of the vertically printed preforms, in accordance with the present disclosure. A method for printing a three-dimensional printed part 600 as described herein includes printing a structure including a portion of a three-dimensional printed part 604 using a drop-on-demand process, wherein it is possible to fire individual droplets on command. Along with precise motion control for the print bed and printhead, the printer can produce fine features such as walls and pillars which are only single-droplet wide. Once the portion of the three-dimensional printed part 604 reaches a build stage where an overhanging section is to start, an upper edge 608 is printed at an upper portion or edge of the portion of the three-dimensional printed part 604. Next, a plurality of pillars 610 is printed onto the upper edge 608. These pillars can have a first dimension or diameter of 0.1 mm to about 1.0 mm, a height of 0.5 mm to about 5.0 mm, or from about 1.0 mm to about 10.0 mm, and can be spaced apart from one another by a distance of from about 0.1 mm to about 1.0 mm. For the purposes of this disclosure and pertaining to the methods and structures described herein, diameter is meant to convey a width in one or more lateral directions of the pillar, and the pillar may have a cylindrical shape, a rectangular shape, a triangular shape, an octagonal shape, or a combination thereof. These pillars or plurality of pillars provides an intermittent structure that provides dimensional stability to a preform, while preserving ductility as well. Next, a thin wall is printed onto a row of finely spaced pillars 610 form a vertical preform 606, which can rotate or bend around the hinge formed by the thin pillars 610 as shown in FIG. 6. While a hinge area having pillars is shown in FIG. 6 and in other views herein, an appropriate hinge for the boundary between the preform 606 section and the remaining rigid portion of the three-dimensional printed part 604 and include a thin and/or flexible section of print material connecting preform 606 section and the remaining rigid portion of the three-dimensional printed part 604 such that the hinge can be bent or folded or manipulated without breaking. These pillars may also be referred to as perforations in a section between the preform 606 section and the remaining rigid portion of the three-dimensional printed part 604. In other examples, the printing of a section thinner than a surrounding wall or a preform can be included in the structure or method. In another exemplary example, one or more small internal, or angled internal overhang sections could be printed to form a hinge or section between the preform 606 section and the remaining rigid portion of the three-dimensional printed part 604. The material forming the hinge section, pillars, or initial section of the vertical preforms 606 can be the same material as the printing material, can be a different material, such as a steel or plastic, such that a balance of ductility with dimensional stability can be maintained. Exemplary materials can include stainless steel, aluminum, a polymer, or a combination thereof. In certain examples, the hinge portion of the three-dimensional printed part 600 may be heated, either in bulk or by a targeted heating method, such as a laser, that only heats the hinge or pillar portion of the bendable region of the preform. The thin ductile material that the hinge can be comprised of, as an extension of various portions of printed parts can deform plastically and remain in a flattened, bent, or set position when lateral force is applied. In other examples, the hinge may not include pillars, but can include a thin portion such as a living hinge is formed, with or without perforations or pillars forming the structure of the hinge, provided a balance of ductility and dimensional stability is preserved. Hinges of the present disclosure may be bendable from a -90 degree to a 90 degree position, by bending in either direction around the structure of the hinge. A wide range of preform angles, either as a result of printing or a result of bending post-printing can be provided without breakage or damage of the preform structure.

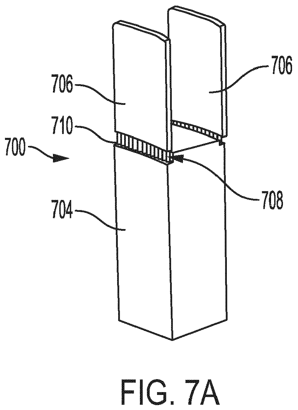

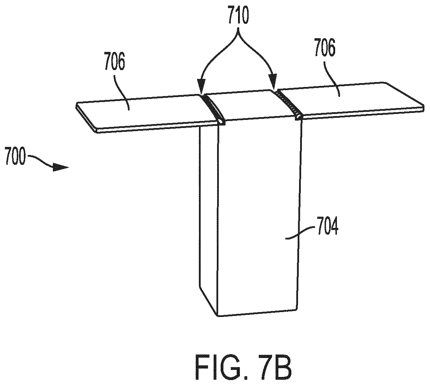

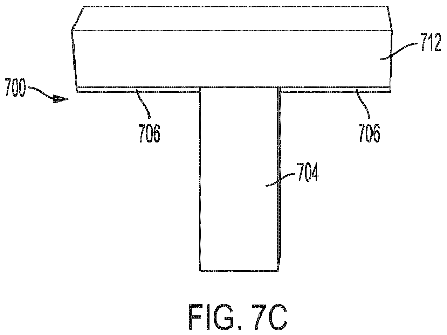

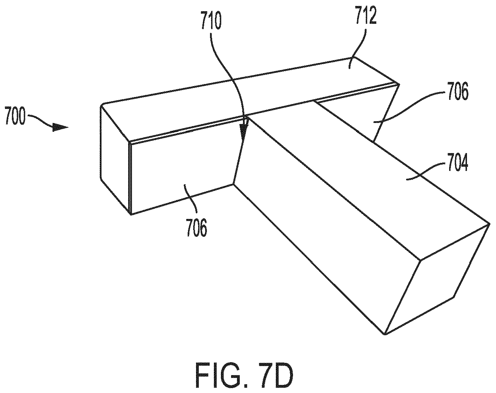

FIGS. 7A-7D are a series of schematic views demonstrating a method of forming an overhang for a three-dimensional printed part using a printed preform, in accordance with the present disclosure. In an exemplary example utilizing the present methods and printing systems, a 'T' shaped three-dimensional printed part 700 was printed with the above-mentioned method. First the stem portion of the three-dimensional printed part 704 was printed and following that, two rows of pillars, or a plurality of pillars 710, were printed inside small recesses 708 or steps at an upper edge of the stem portion of the three-dimensional printed part 704 were created on both the sides of the top of the stem portion of the three-dimensional printed part 704. This plurality of pillars 710 is spaced apart as described previously herein. On top of these pillars 710, the rectangular vertical preforms 706 were printed, in a vertical direction as shown in FIG. 7A. These vertical preforms 706 were flattened later manually, as shown in FIG. 7B. In alternate examples, automated levelling mechanisms, such as those that can be attached to the print head or other element within the printing system, which operate through g-code, can be implemented to flatten the vertical preforms 706 with precision. Next, ejecting one or more drops onto the preform forms an additional solid portion of a part onto the preform, or a horizontal portion 712 of the 'T' shaped three-dimensional printed part 700 was printed on top of the flattened preforms 706, as shown in FIG. 7C. It should be noted that FIG. 7D the surface finish of the underside of the overhanging features created by the preforms 706 of the 'T' shaped three-dimensional printed part 700 is the same as the preform 706 and the remainder of the 'T' shaped three-dimensional printed part 700. In certain examples, the preform is oriented at an angle of 60 degrees or greater relative to a print bed in a first dimension, wherein the preforms 706 shown in FIGS. 7A-7D are oriented at an angle of 90 degrees in a first dimension, relative to the print bed surface. Bending the preform 706 can form an angle of less than 90 degrees relative to the print bed in certain examples. In any example, no portion of the preform 706 contacts the print bed, providing an overhang or extended portion that includes no support structure between an overhang of the part and a print bed or substrate. In certain examples, the preform 706 can be printed at 45 degrees relative to the print bed, where the preform can be bent from 90 degrees, relative to a horizontal, to about -45 degrees. In some examples, this bending angle can be constrained by the presence of one or more of the hinge pillars bending over the outer edge of the recessed feature.

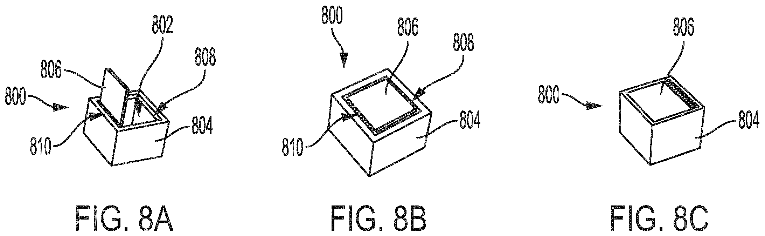

Additional examples of the present disclosure include the printing of geometries such as when a preform is designed to be bent or flattened over a hollow cavity, to form a bridging layer over which additional layers can be printed to form hollow bound geometries. FIGS. 8A-8C are a series of schematic views demonstrating a method of forming a bound hollow geometry for a three-dimensional printed part using a printed preform, in accordance with the present disclosure. FIGS. 8A-8C shows a hollow cuboid printed in accordance with the present disclosure. FIG. 8A shows a three-dimensional printed part 800, in this example, a hollow cuboid. An initial, hollow portion of the three-dimensional printed part 804 has been printed, which includes a central portion 802 that is hollow. A vertical preform 806 is printed onto a plurality of pillars 810 formed on an upper recess 808 or edge of the upper portion of the three-dimensional printed part 804. As shown in FIG. 8B, the central portion 802 is covered by flattening the vertical preform 806 onto the upper portion of the three-dimensional printed part 804. Additional layers may be printed onto a top surface of the three-dimensional printed part 800, or the three-dimensional printed part 800 may be annealed or heated to weld the flattened vertical preform 806 such that it becomes an immutable part of the three-dimensional printed part 800, a hollow cuboid, as shown in FIG. 8C. It should be noted that the preform does not need to be removed from the finished part, as it is expected that it will have a virtually identical surface finish as the remainder of the part.

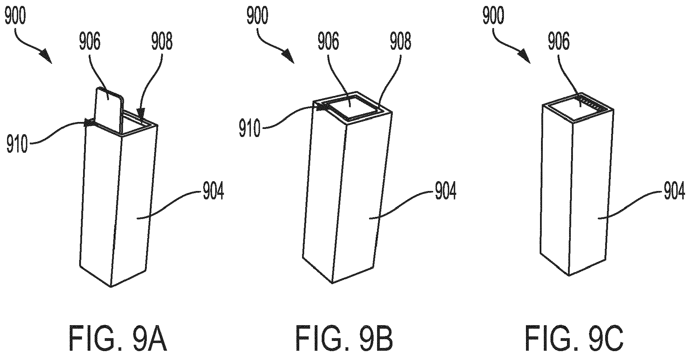

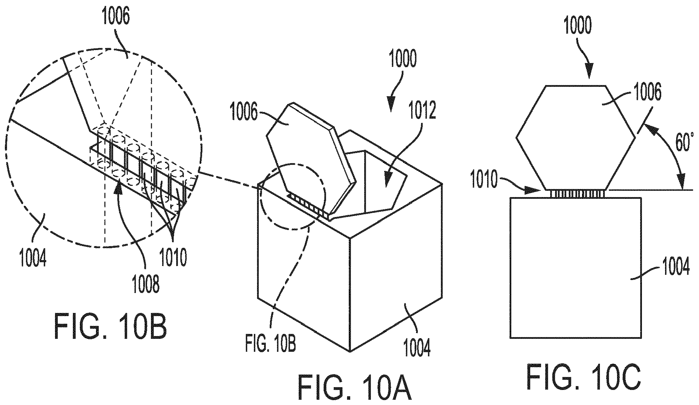

FIGS. 9A-9C are a series of schematic views demonstrating a method of forming a three-dimensional printed part using a printed preform, in accordance with the present disclosure. A similar process applies while printing a tall cuboid, a primary difference being that the preform 906 comes much later in printing as shown in FIGS. 9A-9C. Unlike the usual pillar-based supports which are printed from a solid layer deep-down, or even from the print bed in some cases, it could be inferred that the preforms can be printed just before a bridging layer irrespective of the height of the part. FIG. 9A shows a three-dimensional printed part 900, in this example, a tall hollow cuboid. An initial, hollow portion of the three-dimensional printed part 904 has been printed, which includes a central portion 902 that is hollow. A vertical preform 906 is printed onto a plurality of pillars 910 formed on an upper recess 908 or edge of the upper portion of the three-dimensional printed part 904. As shown in FIG. 9B, the central portion 902 opening is covered by flattening the vertical preform 906 onto the upper portion of the three-dimensional printed part 904. Additional layers may be printed onto a top surface of the three-dimensional printed part 900, or the three-dimensional printed part 900 may be annealed or heated to weld the flattened vertical preform 906 such that it becomes an immutable part of the three-dimensional printed part 900, a tall hollow cuboid, as shown in FIG. 9C. The examples shown in FIGS. 8A-8C, and 9A-9C may be extended or understood to include additional hollow bound geometries and are not necessarily limited to hollow cuboids. For example, if the angle of the overhanging features in the preform itself, such as in the example described in regard to FIGS. 10-10C, where the angle formed by the overhang is 60 degrees, is maintained over 45 degrees from the horizontal, a variety of geometries can be printed.

FIGS. 10A-10C are a series of schematic views demonstrating a method of forming a three-dimensional printed part using a printed preform, in accordance with the present disclosure. It should be noted that preforms 1006 themselves can have overhanging regions depending on the shape of the hollow feature or other feature such that is has to bridge over and a design of the parts should comprehend such details of potential designs that can be enabled by methods and systems of printing of the present disclosure. In an exemplary example object shown in FIGS. 10A-10C, the preform to be printed is a regular hexagon and the angle 60° formed by the hexagon is a natural overhang geometry that printing methods of the present disclosure can comfortably accommodate. In certain examples, such as with the example shown in FIGS. 10A-10C, the preform 1006 is oriented at an angle of 60 or greater relative to a print bed in a second dimension, the second dimension being perpendicular to the first dimension, referring in this example to the lower portion of the hexagonal preform. FIG. 10A shows a three-dimensional printed part 1000, in this example, a tall hollow cuboid having a hexagonal shaped preform 1006, which is initially printed in a first vertical direction. An initial, hollow portion of the three-dimensional printed part 1004 has been printed, which includes a central portion 1012 that is hollow. A vertical preform 1006 is printed onto a plurality of pillars 1010 formed on an upper recess 1008 or edge of the upper portion of the three-dimensional printed part 1004. As shown in FIG. 10B, the detail of the plurality of pillars 1010 formed on the upper recess 1008 is shown. FIG. 10C is a backside view of the three-dimensional printed part 1000 demonstrating a 60° angle in a second dimension perpendicular to the initial print direction of the vertical preform 1006 shown herein. In certain examples, shallow angle overhangs to the horizontal can be formed, as long as other portions of the part do not interfere with such a structure. To complete the shape or portion of an entire printed part, the central portion 1002 opening can be covered by flattening the vertical preform 1006 onto the upper portion of the three-dimensional printed part 1004. As noted in previous examples, but not shown herein, additional layers may be printed onto a top surface of the three-dimensional printed part 1000, or the three-dimensional printed part 1000 may be annealed or heated to weld the flattened vertical preform 1006 such that it becomes an immutable part of the three-dimensional printed part 1000, a hollow cuboid having a hexagonal preform or lid, as shown in FIG. 10C.

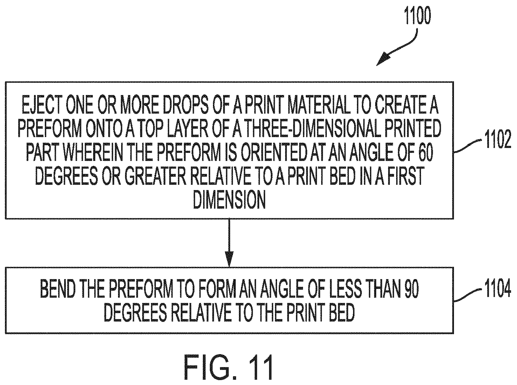

FIG. 11 is a flowchart illustrating a method of forming an overhang for a three-dimensional printed part, in accordance with the present disclosure. FIG. 11 illustrates a method of forming an overhang for a three-dimensional printed part 1100, which begins with a step to eject one or more drops of a print material to create a preform onto a top layer of a three-dimensional printed part wherein the preform is oriented at an angle of 60 degrees or greater relative to a print bed in a first dimension 1102, followed by bending the preform to form an angle of less than 90 degrees relative to the print bed 1104, wherein no portion of the preform contacts the print bed.

The method of forming an overhang for a three-dimensional printed part 1100 can include ejecting one or more drops onto the preform to form an additional solid portion of a part onto the preform. Further, the method of forming an overhang for a three-dimensional printed part 1100 can include bending the preform forms a 0 degree angle relative to the print bed. The method of forming an overhang for a three-dimensional printed part 1100 can include bending to form a bound hollow geometry within the three-dimensional printed part. In certain examples of the method of forming an overhang for a three-dimensional printed part 1100 the preform is oriented at an angle of 60 or greater relative to a print bed in a second dimension, the second dimension being perpendicular to the first dimension. The preform can include a ductile hinge in certain examples of the method of forming an overhang for a three-dimensional printed part 1100, and in some examples, heating the ductile hinge to prior to bending may be done. The method of forming an overhang for a three-dimensional printed part 1100 may include where the ductile hinge comprises one or more pillars, wherein each of the one or more pillars has a diameter of from about 0.1 mm to about 1.0 mm, or wherein each of the one or more pillars has a height of 0.5 mm to about 10.0 mm. In certain examples of the method of forming an overhang for a three-dimensional printed part 1100, each of the one or more pillars are spaced apart from one another, in certain examples the one or more pillars are spaced apart by from about 0.1 mm to about 1.0 mm. In some examples of the method of forming an overhang for a three-dimensional printed part 1100, at least one portion of the ductile hinge is narrower in at least one dimension as compared to at least one other portion of the ductile hinge. A print material for the method of forming an overhang for a three-dimensional printed part 1100 can include a metal, a metallic alloy, or a combination thereof. The print material can include aluminum, copper, tin, combinations thereof, or alloys thereof in some examples.

Examples of the present disclosure further include a method of forming an overhang for a three-dimensional printed part, which includes ejecting one or more drops of a print material to create a preform onto a top layer of a three-dimensional printed part, wherein the preform is oriented at an angle of 60 degrees or greater relative to a print bed in a first dimension, and the preform comprises a ductile hinge, comprising one or more pillars, and bending the preform to form an angle of less than 90 degrees relative to the print bed, wherein no portion of the preform contacts the print bed.

Advantages of the present disclosure include the enabling of printing 3D parts without a need for a separate support dispensing system or support structure, as the preforms can be made of the same material as the part. As the preforms become part of the ultimate geometry, given appropriate design parameters, for example, compensating for thickness for features printed on the top of the preforms, no secondary material removal necessary. As support structures are not needed, there is a reduced risk of supports becoming trapped inside hollow features or intricate voids. As the systems and methods described herein avoids the printing of additional long pillars as supports for bridging, there is also a reduction of height-based vibration or thermal issues. Additionally, considerably less material is utilized for supporting as the preforms are only printed just prior to the bridging layer, or the 0° overhangs relative to the horizontal.

While the present teachings have been illustrated with respect to one or more implementations, alterations and/or modifications may be made to the illustrated examples without departing from the spirit and scope of the appended claims. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of' is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, with a true scope and spirit of the present teachings being indicated by the following claims.

## Claims

1. A method of forming an overhang for a three-dimensional printed part, comprising:
ejecting one or more drops of a print material to create a preform onto a top layer of a three-dimensional printed part wherein the preform is oriented at an angle of 60 degrees or greater relative to a print bed in a first dimension; and
bending the preform to form the overhang having an angle of less than 90 degrees relative to the print bed; and
wherein no portion of the preform contacts the print bed.

2. The method of forming an overhang for a three-dimensional printed part of claim 1, further comprising ejecting one or more drops onto the preform.

3. The method of forming an overhang for a three-dimensional printed part of claim 1, wherein bending the preform forms a 0 degree angle relative to the print bed.

4. The method of forming an overhang for a three-dimensional printed part of claim 1, wherein bending forms a bound hollow geometry within the three-dimensional printed part.

5. The method of forming an overhang for a three-dimensional printed part of claim 1, wherein the preform is oriented at an angle of 60 or greater relative to a print bed in a second dimension.

6. The method of forming an overhang for a three-dimensional printed part of claim 1, wherein the preform comprises a ductile hinge;
optionally, further comprising heating the ductile hinge to prior to bending.

7. The method of forming an overhang for a three-dimensional printed part of claim 6, wherein the ductile hinge comprises one or more pillars;
optionally wherein the one or more pillars are arranged according to one or more:
wherein each of the one or more pillars has a diameter of from about 0.1 mm to about 1.0 mm;
wherein each of the one or more pillars has a height of 0.5 mm to about 10.0 mm;
wherein each of the one or more pillars are spaced apart from one another;
wherein each of the one or more pillars are spaced apart about 0.1 mm to about 1.0 mm.

8. The method of forming an overhang for a three-dimensional printed part of claim 6, wherein at least one portion of the ductile hinge is narrower in at least one dimension as compared to at least one other portion of the ductile hinge.

9. The method of forming an overhang for a three-dimensional printed part of claim 1, wherein the print material comprises a metal, a metallic alloy, or a combination thereof.

10. The method of forming an overhang for a three-dimensional printed part of claim 14, wherein the print material comprises aluminum.

11. A method of forming an overhang for a three-dimensional printed part, comprising:
ejecting one or more drops of a print material to create a preform onto a top layer of a three-dimensional printed part; wherein:
the preform is oriented at an angle of 60 degrees or greater relative to a print bed in a first dimension; and
the preform comprises a ductile hinge, comprising one or more pillars; and
bending the preform to form the overhang having an angle of less than 90 degrees relative to the print bed, wherein no portion of the preform contacts the print bed.

12. The method of forming an overhang for a three-dimensional printed part of claim 11, wherein the print material comprises a metal, a metallic alloy, or a combination thereof.

13. The method of forming an overhang for a three-dimensional printed part of claim 11, wherein:
each of the one or more pillars has a diameter of from about 0.1 mm to about 1.0 mm, a height of 0.5 mm to about 10.0 mm, and are spaced apart from one another by a distance of about 0.1 mm to about 1.0 mm.

14. A printing system, comprising:
an ejector for jetting a print material, comprising:
a structure defining an inner cavity; and
a nozzle orifice in connection with the inner cavity and configured to eject one or more droplets of liquid print material; wherein:
the ejector is configured to form an overhang for a three-dimensional printed part, comprising:
one or more drops to create a preform onto a top layer of a three-dimensional printed part wherein the preform is oriented at an angle of 60 degrees or greater relative to a print bed in a first dimension; and
wherein no portion of the preform contacts the print bed.

15. The printing system of claim 14, wherein the print material comprises a metal, a metallic alloy, or a combination thereof;
optionally wherein the printing material comprises aluminum.
